# EUROPÄISCHE PATENTSCHRIFT

(11) **EP 1 249 601 B1**
(45) Veröffentlichungstag und Bekanntmachung des Hinweises auf die Patenterteilung: **01.02.2006**
(21) Anmeldenummer: 02004814.6
(22) Anmeldetag: 02.03.2002
(51) Int. Cl.: F02N 11/08, F02D 41/06

(54) **Verfahren zum Starten einer Brennkraftmaschine**
Method for starting an internal combustion engine
Méthode pour démarrer un moteur à combustion interne

(30) Priorität: 10.04.2001 DE 10117832
(43) Veröffentlichungstag der Anmeldung: 16.10.2002
(73) Patentinhaber: Bayerische Motoren Werke Aktiengesellschaft, 80809 München (DE)
(72) Erfinder: Wall, Wolfgang, 85604 Zorneding (DE); Ohnemus, Ulrich, 82285 Hattenhofen (DE)

(56) Entgegenhaltungen:
- EP-A- 0 989 300
- WO-A-00/09877
- DE-A- 19 939 813
- DE-C- 19 852 085
- DE-C- 19 951 597

## Beschreibung

Die Erfindung betrifft ein Verfahren zum Starten einer Brennkraftmaschine gemäss den Merkmalen im Oberbegriff des Patentanspruchs 1.

Die Erfindung geht aus von der deutschen Offenlegungsschrift 199 39 813. In dieser ist eine Brennkraftmaschine zum Antrieb eines Kraftfahrzeuges, mit einem an ein Ende der Abtriebswelle (bzw. Kurbelwelle) der Brennkraftmaschine angekoppelten Fahrzeugantriebsgetriebe sowie mit einer über ein Nebengetriebe mit der Brennkraftmaschinenantriebswelle verbundenen Elektromaschine, die wahlweise als Anlassermotor oder als (elektrischer) Stromgenerator betreibbar ist, sowie ein anzutreibendes Hilfsaggregat eingebunden ist, wobei das Nebengetriebe über eine schaltbare Kupplung mit der Kurbelwelle verbindbar ist, und wobei zwischen dem Nebengetriebe und der Kurbelwelle ein Übersetzungsgetriebe nach Art eines Planetengetriebes vorgesehen ist.

Derartige Nebengetriebe sind beispielsweise aus der deutschen Offenlegungsschrift 199 39 813 bekannt.

Aus der deutschen Offenlegungsschrift 19951597 ist ein Verfahren zum starten einer Brennkraftmaschine, die mit zwei startern ausgerüstet ist, bekannt, bei dem bei sehr tiefen Temperaturen die beiden starter aktiviert werden und bei höheren Temperaturen nur den starter mit der kleineren Untersetzung aktiviert wird.

Wie dem Fachmann allgemein bekannt ist, werden Brennkraftmaschinen mit einer Temperatur unter ca. 0° C während der Phase des Warmlaufes, d. h. bis sie eine bestimmte Betriebstemperatur erreicht haben, mit einem fetten, nichtstöchiometrischen Kraftstoff-Luftgemisch (λ< 1) betrieben, da speziell bei tiefen Temperaturen die Gefahr besteht, dass die Brennkraftmaschine bei einem stöchiometrischen Kraftstoff-Luftgemisch (λ = 1) unrund läuft bzw. ausgehen kann. Gründe hierfür sind die erhöhte innere Reibung in den Lagern der Brennkraftmaschine durch bei tiefen Temperaturen hochviskose Schmierstoffe, wodurch dieser ein erhöhtes Antriebsmoment abverlangt wird, wobei darüber hinaus der Brennverlauf noch nicht stabil ist. Diese Nachteile werden durch die sogenannte Anfettung (λ < 1) des Kraftstoff-Luftgemischs in der Kaltstartphase umgangen, das heißt, die Brennkraftmaschine wird mit mehr Kraftstoff betrieben, als für die Verbrennung nötig ist.

Problematisch sind jedoch die erhöhten Kohlenwasserstoff-Rohemissionen durch den Überschuss an Kraftstoff im Gemisch, die nachträglich katalytisch oxidiert werden müssen. Diese nachteiligen Startvoraussetzungen liegen auch bei der eingangs beschriebenen Offenlegungsschrift vor.

Aufgabe der Erfindung ist es, die Schadstoff-Rohemissionen, insbesondere die der Kohlenwasserstoffe, während der Kaltstartphase zu minimieren.

Diese Aufgabe wird durch die Merkmale im kennzeichnenden Teil des Patentanspruchs 1 gelöst.
Durch das hier geschilderte Verfahren wird die Brennkraftmaschine nicht nur bis zum Einsetzen der Zündung auf eine Startdrehzahl geschleppt, sondern auch nach dem Einsetzen der Zündung weitergeschleppt. Hierdurch kann vorteilhafterweise auf die Kaltstartanfettung, wie sie normalerweise für Brennkraftmaschinen eingesetzt wird, verzichtet werden. Das Kaltstartverhalten wird deutlich gegenüber der herkömmlichen Methode verbessert.

Durch den Betrieb der Brennkraftmaschine mit einem stöchiometrischen Kraftstoff-Luftgemisch (λ = 1) wird nur die, für die Brennkraftmaschine für eine saubere Verbrennung notwendige Kraftstoffmenge, zugeführt. Die Elektromaschine unterstützt die Brennkraftmaschine solange, bis ein einwandfreier Brennkraftmaschinenlauf (Brennverlauf) bei einem stöchiometrischen Verhältnis zwischen Kraftstoff und Luft möglich ist. Durch die Umschaltung der Elektromaschinendrehzahl durch eine kleinere Untersetzung auf die Kurbelwelle, sind höhere Drehzahlen für die Brennkraftmaschine möglich, ohne die Elektromaschine zu zerstören.

Besonders vorteilhaft kann dieses Startverfahren für ein Motor-Stopp-System eingesetzt werden. Unter Motor-Stopp-System wird ein Betriebsverfahren für ein Kraftfahrzeug verstanden, bei dem bei Fahrzeugstillstand, bzw. bei Nulllastanforderung oder Schubbetrieb für mehrere Sekunden, die Brennkraftmaschine ausgeschalten und beispielsweise durch Antippen des Gaspedals automatisch wieder gestartet wird.

Gemäß Anspruch 2 ist die Startdrehzahl der Brennkraftmaschine von Anfang an erhöht, wodurch die Startzeit bei einem Warmstart (Start bei einer Brennkraftmaschinentemperatur über dem Schwellwert) erheblich verkürzt wird. Besonders vorteilhaft wirkt sich diese Startzeitverkürzung wieder bei einem Motor-Stopp-System aus, wodurch die Akzeptanz des Fahrers für ein derartiges System deutlich erhöht wird.

Ferner entfällt vorteilhafterweise ein für den Fahrer zumindest leicht spürbarer Schaltvorgang zu dem Zeitpunkt, wenn die Zündung der Brennkraftmaschine einsetzt. Wie auch bei einem Kaltstart, unterstützt die Elektromaschine die Brennkraftmaschine so lange,bis ein ruhiger und sauberer Brennkraftmaschinenlauf (Brennverlauf) bei einem stöchiometrischen Gemisch gewährleistet ist.

Nach Anspruch 3 kann es sich bei der Elektromaschine um einen handelsüblichen Starter für Brennkraftmaschinen handeln, jedoch auch Starter-Generator-Kombinationen sind hierbei denkbar. Eine Auflistung von für dieses Startverfahren einsetzbaren Getrieben findet sich beispielsweise in der deutschen Offenlegungsschrift 199 39 813.

Die Brennkraftmaschinentemperaturmessung findet gem. Anspruch 4 am einfachsten in denjenigen Medien statt, deren Temperatur standardmäßig gemessen wird und die repräsentativ für die Brennkraftmaschine ist.

Gemäß Anspruch 5 liegt der Schwellwert der Brennkraftmaschinentemperatur in Abhängigkeit vom Brennkraftmaschinentyp, je nach vorherrschender innerer Reibung, die neben weiteren Faktoren wie beispielsweise von der Zylinderzahl abhängig ist, bei einem unterschiedlichen Wert.

Bei dem hier vorgeschlagenen Verfahren zum Starten einer Brennkraftmaschine wird nahezu kein unverbrannter Kohlenwasserstoff emittiert. Da bei einem heute üblichem Kraftfahrzeug nahezu 90 % der Kohlenwasserstoff-Emissionen während der Kaltstartphase ausgestoßen werden, stellt dieses Verfahren einen wesentlichen Schritt zur Reduktion von Schadstoffrohemissionen, insbesondere von Kohlenwasserstoffen, bei Brennkraftmaschinen dar.

Darüberhinaus unterstützt der Elektromotor während des Anfahrens des Kraftfahrzeuges die Brennkraftmaschine, wodurch Kraftstoff eingespart und somit der Verbrauch gesenkt werden kann.

Im Folgenden ist ein bevorzugtes Ausführungsbeispiel erläutert.

Eine Brennkraftmaschine und eine Elektromaschine sind wie in der deutschen Offenlegungsschrift 199 39 813 beschrieben zueinander angeordnet und durch ein zweistufiges, über einen Freilauf schaltbares Planetengetriebe miteinander verbunden. Die zwei Untersetzungsstufen sind jeweils einzeln oder miteinander gekoppelt schaltbar. Somit ergeben sich insgesamt drei Untersetzungsstufen. Eine erste Untersetzungsstufe, eine zweite Untersetzungsstufe und eine dritte Untersetzungsstufe, die durch Zusammenschalten der ersten und der zweiten Untersetzungsstufe erzielt wird.

Die erste Untersetzungsstufe untersetzt die Drehzahl stärker als die zweite Untersetzungsstufe, die größte Untersetzung wird bei der dritten Untersetzungsstufe erreicht, die sich aus dem Produkt von der ersten und der zweiten Untersetzung ergibt.

Die erste und die zweite Untersetzungsstufe können auch den gleichen Wert aufweisen.

Zum Starten der Brennkraftmaschine bei tiefen Außentemperaturen, die Brennkraftmaschinentemperatur, die im Kühlmittel gemessen wird, liegt hier unter einem Schwellwert von 0° C, wird die größte, die dritte Untersetzungsstufe verwendet. Sobald die Zündung einsetzt, wird die zweite Untersetzungsstufe über einen Freilauf ohne Zugkraftunterbrechung ruckfrei abgekuppelt und die Brennkraftmaschine nur noch über die erste Untersetzungsstufe angetrieben.

Bei anderen Antrieben kann es auch, abhängig von dem, von der Elektromaschine aufzubringenden Schleppmoment, sinnvoll sein, die erste Untersetzungsstufe über einen Freilauf ohne Zugkraftunterbrechung ruckfrei abzukuppeln und die Brennkraftmaschine über die zweite Untersetzungsstufe anzutreiben.

Bei einem wiederholten Warmstart bei einer Brennkraftmaschinentemperatur hier bei über 0° C, insbesondere bei einem Motor-Stopp-Betrieb des Kraftfahrzeuges, wird die Brennkraftmaschine ausschließlich über die erste Untersetzungsstufe angetrieben.

Wiederum abhängig von dem, von der Elektromaschine aufzubringenden Schleppmoment kann es auch hier sinnvoll sein, die erste Untersetzungsstufe über einen Freilauf ohne Zugkraftunterbrechung ruckfrei abzukuppeln und die Brennkraftmaschine über die zweite Untersetzungsstufe anzutreiben.

## Patentansprüche

1. Verfahren zum Starten einer Brennkraftmaschine mit einer Kurbelwelle und einer zumindest zum Starten der Brennkraftmaschine vorgesehenen Elektromaschine, wobei die Elektromaschine und die Kurbelwelle über ein schaltbares Getriebe mit zumindest einer ersten Untersetzungsstufe oder einer zweiten Untersetzungsstufe oder über die erste Untersetzungsstufe und die zweite Untersetzungsstufe miteinander gekoppelt werden können,
**dadurch gekennzeichnet, dass**
beim Starten der Brennkraftmaschine mit einer Brennkraftmaschinentemperatur unter einem Schwellwert die Elektromaschine und die Kurbelwelle mit der ersten Untersetzungsstufe und der zweiten Untersetzungsstufe gekoppelt werden und
die Brennkraftmaschine von der Elektromaschine mit der ersten Untersetzungsstufe und der zweiten Untersetzungsstufe bis zum Zündungsstart angetrieben wird und
frühestens ab dem Zündungsstart der Brennkraftmaschine eine stöchiometrische Gemischzusammensetzung zugeführt wird und
das Getriebe auf die erste Untersetzungsstufe oder die zweite Untersetzungsstufe umgeschalten wird und
die Brennkraftmaschine von der Elektromaschine über die erste Untersetzungsstufe oder die zweite Untersetzungsstufe so lange mitangetrieben wird, bis
die Brennkraftmaschine bei Zuführung einer stöchiometrischen Gemischzusammensetzung selbsttätig einen stabilen Brennverlauf aufweist.

2. Verfahren nach Anspruch 1,
**dadurch gekennzeichnet, dass** beim Starten der Brennkraftmaschine mit einer Brennkraftmaschinentemperatur über dem Schwellwert die Elektromaschine und die Kurbelwelle von Anfang an mit der ersten Untersetzungsstufe oder der zweiten Untersetzungsstufe gekoppelt sind und
die Brennkraftmaschine von der Elektromaschine so lange über die erste Untersetzungsstufe oder die zweite Untersetzungsstufe mitangetrieben wird, bis
die Brennkraftmaschine bei Zuführung einer stöchiometrischen Gemischzusammensetzung selbsttätig einen stabilen Brennverlauf aufweist.

3. Verfahren nach Anspruch 1 oder 2,
**dadurch gekennzeichnet, dass** die Elektromaschinendrehzahl von der ersten Untersetzungsstufe und der zweiten Untersetzungsstufe stärker untersetzt wird, als von der ersten Untersetzungsstufe oder der zweiten Untersetzungsstufe.

4. Verfahren nach Anspruch 1 oder 2, wobei die Brennkraftmaschine mit einem Kühlmittel gekühlt wird und mit einem Schmiermittel geschmiert wird,
**dadurch gekennzeichnet, dass** der Schwellwert der Brennkraftmaschinentemperatur im Kühlmittel oder im Schmiermittel gemessen wird.

5. Verfahren nach Anspruch 1 oder 2,
**dadurch gekennzeichnet, dass** der Schwellwert der Brennkraftmaschinentemperatur zwischen -30° C und 50 ° C liegt.

## Claims

1. A method for starting an internal-combustion engine with a crankshaft and an electric motor provided at least for starting the internal-combustion engine, wherein the electric motor and the crankshaft can be coupled to one another via a shiftable transmission with at least a first gear reduction stage or a second gear reduction stage or via the first gear reduction stage and the second gear reduction stage,
**characterised in that**
when starting the internal-combustion engine at an internal-combustion engine temperature below a threshold value, the electric motor and the crankshaft are coupled with the first gear reduction stage and the second gear reduction stage and
the internal-combustion engine is driven by the electric motor with the first gear reduction stage and the second gear reduction stage up to the start of the ignition and,
at the earliest from the start of the ignition, a stoichiometric mixture composition is fed to the internal-combustion engine and
the transmission is switched to the first gear reduction stage or the second gear reduction stage and
the internal-combustion engine is also driven by the electric motor via the first gear reduction stage or the second gear reduction stage until
the internal-combustion engine automatically has a stable combustion course during feeding of a stoichiometric mixture composition.

2. A method according to claim 1,
**characterised in that** when starting the internal-combustion engine with an internal-combustion engine temperature above the threshold value, the electric motor and the crankshaft are coupled from the beginning with the first gear reduction stage or the second gear reduction stage and
the internal-combustion engine is also driven by the electric motor via the first gear reduction stage or the second gear reduction stage until the internal-combustion engine automatically has a stable combustion course during feeding of a stoichiometric mixture composition.

3. A method according to claim 1 or claim 2,
**characterised in that** the electric motor speed is more strongly reduced by the first gear reduction stage and the second gear reduction stage than by the first gear reduction stage or the second gear reduction stage.

4. A method according to claim 1 or claim 2, wherein the internal-combustion engine is cooled by a coolant and is lubricated by a lubricant,
**characterised in that** the threshold value of the internal-combustion engine temperature is measured in the coolant or in the lubricant.

5. A method according to claim 1 or claim 2, **characterised in that** the threshold value of the internal-combustion engine temperature is between -30°C and 50°C.

## Revendications

1. Procédé pour démarrer un moteur à combustion interne comportant un vilebrequin et une machine électrique prévue au moins pour démarrer le moteur à combustion interne, selon lequel la machine électrique et le vilebrequin peuvent être couplés l'un à l'autre par l'intermédiaire d'une boîte de vitesses embrayable à l'aide d'au moins un premier étage de réduction ou d'un deuxième étage de réduction ou à l'aide du premier étage de réduction et du deuxième étage de réduction,
**caractérisé en ce que**
quand le moteur à combustion interne démarre alors que sa température est inférieure à une valeur seuil, la machine électrique et le vilebrequin sont couplés à l'aide du premier étage de réduction et du deuxième étage de réduction,
le moteur à combustion interne est entraîné par la machine électrique à l'aide du premier étage de réduction et du deuxième étage de réduction jusqu'à ce que l'allumage commence,
une composition stoechiométrique du mélange est acheminée au plus tôt au moment où le moteur à combustion interne commence l'allumage la boîte de vitesses passe au premier étage de réduction ou au deuxième étage de réduction, et
le moteur à combustion interne est aussi entraîné par la machine électrique à l'aide du premier étage de réduction ou du deuxième étage de réduction jusqu'à ce que le moteur à combustion interne ait automatiquement un gradient de combustion stable lorsque la composition de mélange acheminée est stoechiométrique.

2. Procédé selon la revendication 1,
**caractérisé en ce que**
quand le moteur à combustion interne démarre à une température supérieure à la valeur seuil, la machine électrique et le vilebrequin sont dès le début couplés au premier étage de réduction ou au deuxième étage de réduction, et
le moteur à combustion interne est aussi entraîné par la machine électrique à l'aide du premier étage de réduction ou du deuxième étage de réduction jusqu'à ce que le moteur à combustion interne ait automatiquement un gradient de combustion stable lorsque la composition de mélange acheminée est stoechiométrique.

3. Procédé selon la revendication 1 ou 2,
**caractérisé en ce que**
la vitesse de rotation de la machine électrique est plus fortement réduite par le premier étage de réduction et le deuxième étage de réduction que par le premier étage de réduction ou par le deuxième étage de réduction.

4. Procédé selon la revendication 1 ou 2, selon lequel le moteur à combustion interne est refroidi par un agent de refroidissement et est lubrifié par un lubrifiant
**caractérisé en ce que**
la valeur seuil pour la température du moteur à combustion interne est mesurée dans l'agent de refroidissement ou dans le lubrifiant.

5. Procédé selon la revendication 1 ou 2,
**caractérisé en ce que**
la valeur seuil pour la température du moteur à combustion interne est comprise entre -30°C et 50°C.
